# EUROPEAN PATENT SPECIFICATION

(11) **EP 0 510 330 B1**
(45) Date of publication and mention of the grant of the patent: **27.11.1996**
(21) Application number: 92103268.6
(22) Date of filing: 26.02.1992
(51) Int. Cl.: H04N 3/22

(54) **Raster position adjusting circuit**
Schaltung zur Einstellung der Rasterposition
Circuit de réglage de la position de trame

(30) Priority: 27.02.1991 JP 32791/91
(43) Date of publication of application: 28.10.1992
(73) Proprietor: MATSUSHITA ELECTRIC INDUSTRIAL CO., LTD., Kadoma-shi, Osaka-fu, 571 (JP)
(72) Inventor: Yamate, Kazunori, Ibaraki-shi, Osaka (JP); Kinoshita, Hideo, Takatsuki-shi, Osaka (JP); Uenishi, Chikara, Kanagawa-ken (JP); Ugajin, Masafumi, Fujisawa-shi, Kanagawa-ken (JP); Kidokoro, Shinichi, Fujisawa-shi, Kanagawa-ken (JP); Yamagiwa, Hiroshi, Kamakura-shi, Kanagawa-ken (JP)
(74) Representative: Pellmann, Hans-Bernd, Dipl.-Ing.

(56) References cited:
- EP-A- 0 240 142
- DE-A- 3 924 026

## Description

The present invention relates to a raster position adjusting circuit for controlling a horizontal raster position of an electromagnetic type cathode ray tube (which will be referred hereinafter to as a CRT).

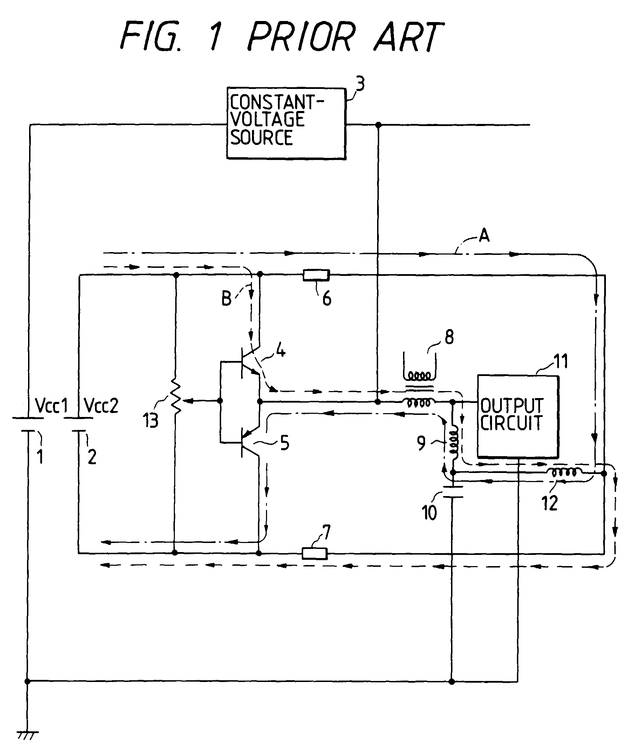

Fig. 1 is an illustration of an arrangement of a conventional raster position adjusting circuit including a first power source Vcc1 designated at numeral 1 and a second power source Vcc2 designated at numeral 2, the first power source Vcc1 being for the circuit and the second power source Vcc2 being for supplying a direct current to a horizontal deflecting coil 9. The horizontal raster is made by supplying a direct current to the horizontal deflecting coil 9, and the horizontal right and left raster position adjustment can be effected by means of current path systems indicated by arrows A (chain line) and B (dotted line) in Fig. 1. The horizontal deflection circuit is basically composed of the first power source Vcc1, a constant-voltage source 3, a flyback transformer 8, the horizontal deflecting coil 9, a direct-current blocking capacitor 10, and a horizontal output circuit 11, and additionally equipped with a choke coil 12 (which prevents the horizontal pulse from being by-passed), resistors 6, 7, transistors 4, 5, a volume 13 and the second power source Vcc2 in order to change the raster position. A partial voltage of the second power source Vcc2 depending on the position of a movable contact of the volume 13 is applied to the bases of both the transistors 4 and 5, whereby either one of the transistors 4 and 5 turns ON in accordance with the applied voltage due to the volume 13 in relation to the same emitter electric potential so as to supply a current to the horizontal deflecting coil 9 through the current path system indicated by the arrow A or B.

However, in such a conventional raster position adjusting circuit using the volume 13 arises a problem in that its reliability may be lowered due to an imperfect connection of the movable contact because of the mechanical structure of the volume 13, and it is difficult to easily achieve the automatization of the adjustment of the raster position in the manufacturing process because a dedicated device is required for operation of the volume. In addition, the position for the provision of the volume is restricted on the printed circuit board.

Furthermore, document DE-A-3924026 discloses a control device for controlling the horizontal position of an image raster for use in a display device. A control transistor which determines the base current of respective output transistors has its base connected to a DC control voltage output circuit serving as an automatic DC current component adjusting means. With increase of the DC control voltage the collector current flowing through the control transistor causes a voltage drop at a resistor through which said collector current flows which in turn results in a drop of the base voltage of the output transistors, so that the base voltage of the output transistors is determined by the DC control voltage and the DC current component of the deflection current flowing through the horizontal deflection coil is adjusted in accordance with the DC control voltage automatically.

It is therefore an object of the present invention to provide a raster position adjusting circuit which allows easy automatization of the adjustment of the raster position in the manufacturing process.

According to the invention, this object is accomplished by raster position adjusting circuit as defined in claims 1 and 3.

Accordingly, the raster position adjusting circuit according to the present invention features in that, with the grounded sides of first and second voltage sources being arranged so as not to be coupled to each other, the voltage supply side of the first voltage source is coupled to one terminal of a current supply source, whose current supply ability is I amperes, and further coupled to a constant-voltage source, and a voltage-controlled type current supply source whose maximum current drawing ability is two times the current supply ability I of the current supply source is at one terminal coupled to the other terminal of the current supply source and at the other terminal coupled to the grounded side of the first voltage source and arranged to be responsive to the output voltage of a digital-to-analog (D/A) converter. Further, a junction point between the current supply source and the voltage-controlled type current supply source is connected to one terminal of a first resistor and bases of first and second transistors, the other terminal of the first resistor and emitters of the first and second transistors are coupled to each other at a point so that the coupling point is coupled to an output terminal of the constant-voltage source, a collector of the first transistor is coupled to a voltage supply side of the second voltage source and a collector of the second transistor is coupled to a grounded side of the second voltage source, one terminal of a second resistor is coupled to a junction point between the collector of the first transistor and the second voltage source and one terminal of a third resistor is coupled to a junction point between the collector of the second transistor and the second voltage source, the other terminal of the second resistor and the other terminal of the third resistor is coupled to each other, one terminal of a primary side of a flyback transformer is coupled to the junction point between the emitters of the first and second transistors and the output terminal of the constant-voltage source and the other terminal of the primary side thereof is coupled to a horizontal output circuit, one terminal of a horizontal deflecting coil is coupled to a junction point between the other terminal of the primary side of the flyback transformer and the horizontal output circuit and the other terminal of the horizontal deflecting coil is coupled to one terminal of a direct-current blocking capacitor, the other terminal of the direct-current blocking capacitor is coupled to the grounded side of the first voltage source, one terminal of a choke coil is coupled to a junction point between the second and third resistors, and the other terminal of the choke coil is coupled to a junction point between the horizontal deflecting coil and the direct-current blocking capacitor.

With this circuit arrangement, in the case of changing the raster position by supplying direction-different currents to the horizontal deflecting coil, a different current between the currents of the current supply source and the voltage-controlled current supply source flows through the first resistance provided between the emitters and the bases of the first and second transistors, whereby the first transistor turns ON and the second transistor turns OFF or the second transistor turns ON and the first transistor turns OFF. At this time, since the voltage between the emitters and the bases of the first and second transistors varies in accordance with the current value flowing through the first resistor, it is possible to control the current directing from the emitter of the first transistor to the emitter of the second transistor. Further, since in this operation the drawing current of the voltage-controlled type current supply source is controllable in a range from 0 to 2I amperes in accordance with the output voltage of the D/A converter, when the drawing current thereof is from 0 to a value smaller than I, the different current between the current due to the current supply source and the drawing current of the voltage-controlled type current supply source is introduced into the first resistor, because the current supply ability I of the first current supply source is constant, so that the base voltage viewed from the emitter of the first transistor increases, and hence the first transistor operates and the second transistor stops to operate. On the other hand, when the drawing current of the voltage-controlled type current supply source is I to 2I, the difference current therebetween is discharged through the first resistor whereby the first transistor stops to operate and the second transistor starts to operate.

In accordance with the present invention, there is also provided a raster position adjusting circuit for use in a cathode ray tube, comprising: horizontal deflection means including a deflecting coil for deflecting an electron beam directing to a screen of the cathode ray tube; constant-current supply means for supplying a constant current; voltage-controlled type current supply means coupled to the constant-current supply means and arranged such that its drawing current is controllable in accordance with an external voltage signal; and switching means coupled to a junction point between the constant-current supply means and the voltage-controlled type current supply means and further coupled to the deflecting coil of the horizontal deflection means, the switching means being arranged so as to control a current flowing through the deflecting coil in accordance with a difference current between the constant-current supply means and said voltage-controlled type current supply means to adjust a position of a raster on the screen of the cathode ray tube.

The object and features of the present invention will become more readily apparent from the following detailed description of the preferred embodiments taken in conjunction with the accompanying drawings in which:
Fig. 1 shows an arrangement of a conventional raster position adjusting circuit;
Fig. 2 illustrates an arrangement of a raster position adjusting circuit according to an embodiment of the present invention;
Fig. 3 shows one example of the above-mentioned horizontal output circuit; and
Fig. 4 shows the voltage-controlled type current supply source.

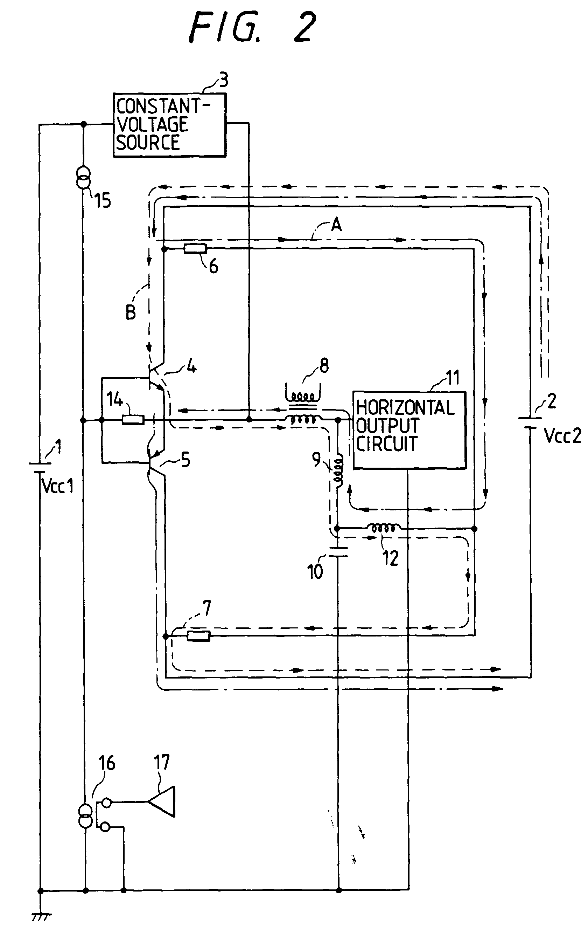

Referring now to Fig. 2, there is illustrated an arrangement of a raster position adjusting circuit according to an embodiment of the raster position adjusting circuit, where parts corresponding to those in Fig. 1 showing the conventional arrangement are marked with the same characters and numerals. In Fig. 2, This raster position adjusting circuit comprises a horizontal deflection circuit including a power source (Vcc1) 1, a constant-voltage source 3, a flyback transformer 8, a horizontal output circuit 11, a horizontal deflecting coil 9, and a direct-current blocking capacitor 10. Further, provided are a pair of first and second transistors 4, 5, first to third resistors 14, 6, 7, a choke coil 12 and a power source (Vcc2) 2, thus basically making up a raster position adjusting circuit which effects the position adjustment of the horizontal raster on a CRT. More specifically, this raster position adjusting circuit is first arranged such that the grounded sides of the power sources 1 and 2 are not coupled to each other. The raster position adjusting circuit is additionally equipped with a first current supply source (constant-current supply source) 15 whose current supply ability is I (ampere) and a voltage-controlled type current supply source (a second current supply source) 16 whose maximum current drawing ability is 2 times the current supply ability I of the first current supply source 15. The first current supply source 15 is at one terminal connected to the voltage supply side of the power source 1. The voltage supply side of the power source 1 is also connected to a constant-voltage source 3. The other terminal of the first current supply source 15 is connected to one terminal of the voltage-controlled type current supply source 16, the other terminal of the voltage-controlled type current supply source 16 being coupled to the grounded side of the power source 1. The voltage-controlled type current supply source 16 is in a coupling relation to a DA (digital-to-analog) converter 17 so as to be responsive to the output voltage thereof.

A junction point between the first current supply source 15 and the voltage-controlled type current supply source 16 is coupled to one terminal of the first resistor 14 and further connected to the bases of the first and second transistors 4 and 5. The emitters of the first and second transistors 4, 5 and the other terminal of the first resistor 14 are directly coupled to each other at a coupling point which is in turn coupled to the output terminal of the constant-voltage source 3. The collector of the first transistor 4 is coupled to the supply side of the power source 2 and the collector of the second transistor 5 is coupled to the grounded side of the power source 2. Further, a junction point between the collector of the first transistor 4 and the power source 2 is connected to one terminal of the second resistor 6, and a junction point between the collector of the second transistor 5 and the power source 2 is connected to one terminal of the third resistor 7. The other terminals of the second and third resistors 6 and 7 are coupled to each other.

Moreover, one terminal of the primary side of the flyback transformer 8 is connected to a junction point between the emitters of the first and second transistors 4, 5 and the output terminal of the constant-voltage source 3, and the other terminal of the primary side thereof is coupled to the horizontal output circuit 11 whose grounded terminal is coupled to the grounded side of the power source 1, and a junction point between the flyback transformer 8 and the horizontal output circuit 11 is connected to one terminal of the horizontal deflecting coil 9, the other terminal of the horizontal deflecting coil 9 being coupled through the direct-current blocking capacitor 10 to the grounded side of the power source 1. Further, one terminal of the choke coil 12 is connected to a junction point between the second and third resistors 6 and 7 and the other terminal of the choke coil 12 is connected to a junction point between the horizontal deflecting coil 9 and the direct-current blocking capacitor 10. The choke coil 12 is for preventing a horizontal pulse from the introduction into the raster position adjusting circuit. With a base voltage viewed from the emitters of the first and second transistors 4, 5 being applied to the bases thereof, currents indicated by characters A and B in Fig. 2 flow through the horizontal deflecting coil 9, thereby allowing the raster position adjustment.

A base voltage is applied to each of the first and second transistors 4 and 5 due to a current flowing through the first resistor 14. This base voltage occurs because the difference between the current of the constant-voltage source 15 having the current supply ability I (ampere) and the current of the voltage-controlled type current supply source 16 having the maximum current drawing ability 2I is introduced and discharged into and from the first resistor 14. Here, the drawing current is controllable by the D/A converter 17 in a range from 0 to 2I. Thus, in the case that the drawing current of the voltage-controlled type current supply source 16 is 0 to a value which does not reach I, a portion of the current I of the constant-current supply source 15 is introduced into the voltage-controlled type current supply source 16 and the other current thereof which cannot be introduced thereinto passes through the first resistor 14, and hence, when viewed from the emitters of the first and second transistors 4 and 5, the base voltages of the first and second transistors 4 and 5 increase. At this time, since the first transistor 4 is a NPN transistor and the second transistor 5 is a PNP transistor, although the second transistor 5 takes the non-energizing (turning-OFF) state, the first transistor 4 takes the energizing (turning-ON) state whereby the current flows in the direction indicated by the arrow B in Fig. 2. On the other hand, in the case that the drawing current of the voltage-controlled type current supply source 16 is I to 2I, since the current supply ability of the constant-current source 15 is I, the remaining current flows through the first resistor 14 and therefore, when viewed from the emitters of the first and second transistors 4 and 5, the base voltages of the first and second transistors 4 and 5 decrease. Accordingly, the NPN transistor 4 stops to operate and the PNP transistor 5 starts to operate so that the current flows in the direction indicated by the arrow A in Fig. 2. That is, with the current of the voltage-controlled type current supply source 16 being controllable by the voltage applied from the D/A converter 17, the base-emitter voltages of the first and second transistors 4 and 5 vary in accordance with the introduction and discharge into and from the first resistor 14, whereby it is possible to change the direction and value of the deflecting-coil-flowing current (A, B) to allow the raster position adjustment.

As described above, according to this invention, the electronic control of the current flowing through the deflecting coil can be effected with the emitter-base voltages being applied to the first and second transistors on the basis of the current between the constant-current supply source and the voltage-controlled type current supply source which is controllable through the D/A converter 17. This arrangement allows the improvement of the reliability of the circuit and the computer-based automization unlike the conventional circuit using a mechanical volume.

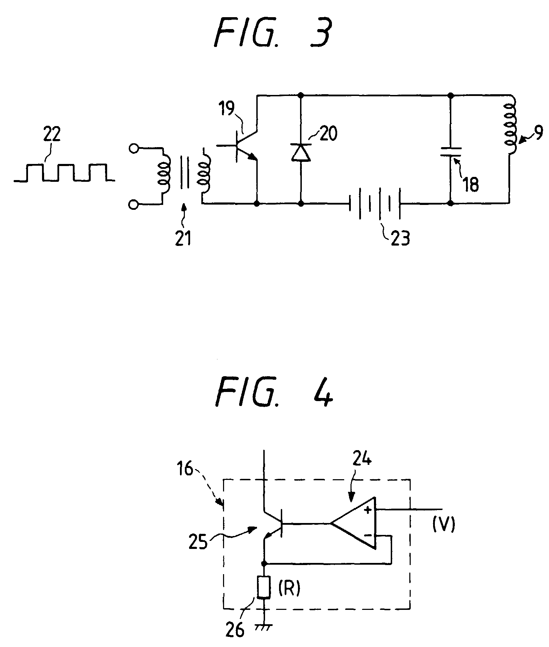

Fig. 3 shows one example of the above-mentioned horizontal output circuit 11. This horizontal output circuit is for intermitting the voltage to the deflecting coil 9 in accordance with the period of the horizontal frequency 22 so as to supply a sawtooth current to the horizontal deflecting coil 9. As illustrated in Fig. 3, the horizontal output circuit 11 comprises a drive transformer 21, a horizontal output transistor 19, a damper diode 20, a direct-current power source 23 and a resonance capacitor 18. In addition to the supply of the sawtooth current to the horizontal deflecting coil 9, the horizontal output circuit 11 also has a purpose of supplying a power to the other circuits by using the flyback pulse generated in its own circuit.

Fig. 4 illustrates one example of the voltage-controlled type current supply source 16. This voltage-controlled type current supply source 16 is arranged to vary the current drawing ability in accordance with the inputted voltage. In Fig. 4, the voltage-controlled type current supply source 16 is operated so that the + input voltage terminal and the - input voltage terminal of an operational amplifier 24 become equal to each other, and hence the value of the DC voltage becomes equal to the emitter voltage of a transistor, whereby the emitter current having a value of (V/R) flows. V represents the value of the DC voltage and R designates the value of a resistor 26.

## Claims

1. A raster position adjusting circuit comprising: first (Vcc1) and second (Vcc2) voltage sources; a current supply source (15); a constant-voltage source (3); a voltage-controlled type current supply source (16); a digital-to-analog converter (17); a flyback transformer (8); a horizontal output circuit (11); a horizontal deflecting coil (9); direct-current blocking capacitor (10); and a choke coil (12), a voltage supply side of said first voltage source being coupled to one terminal of said current supply source and further coupled to one terminal of said constant-voltage source, the other terminal of said current supply source being coupled to one terminal of said voltage-controlled type current supply source and the other terminal of said voltage-controlled type current supply source being coupled to a grounded side of said first voltage source, said digital-to-analog converter being coupled to said voltage-controlled type current supply source so that an output voltage of said digital-to-analog converter is applied thereto, a junction point between said current supply source and said voltage-controlled type current supply source being connected to one terminal of a first resistor (14) and bases of first (4) and second (5) transistors, the other terminal of said first resistor and emitters of said first and second transistors being coupled to each other at a point so that the coupling point is coupled to an output terminal of said constant-voltage source, a collector of said first transistor being coupled to a voltage supply side of said second voltage source and a collector of said second transistor being coupled to a grounded side of said second voltage source, one terminal of a second resistor (6) being coupled to a junction point between said collector of said first transistor and said second voltage source and one terminal of a third (7) resistor being coupled to a junction point between said collector of said second transistor and said second voltage source, the other terminal of said second resistor and the other terminal of said third resistor being coupled to each other, one terminal of a primary side of said flyback transformer being coupled to the junction point between said emitters of said first and second transistors and said output terminal of said constant-voltage source and the other terminal of said primary side thereof being coupled to said horizontal output circuit, one terminal of said horizontal deflecting coil being coupled to a junction point between the other terminal of said primary side of said flyback transformer and said horizontal output circuit and the other terminal of said horizontal deflecting coil being coupled to one terminal of said direct-current blocking capacitor, the other terminal of said direct-current blocking capacitor being coupled to the grounded side of said first voltage source, one terminal of said choke coil being coupled to a junction point between said second and third resistors, and the other terminal of said choke coil being coupled to a junction point between said horizontal deflecting coil and said direct-current blocking capacitor.

2. A raster position adjusting circuit as claimed in claim 1, wherein, when the current supply ability of said current supply source is taken to be I (ampere), the maximum current drawing ability of said voltage-controlled type current supply source is arranged to be 2 · I (ampere).

3. A raster position adjusting circuit for use in a cathode ray tube, comprising:
horizontal deflection means including a deflecting coil (9) for deflecting an electron beam directing to a screen of said cathode ray tube;
constant-current supply means (15) for supplying a constant current;
voltage-controlled type current supply means (16) coupled to said constant-current supply means and arranged such that its drawing current is controllable in accordance with an external voltage signal; and
switching means (4, 5) coupled to a junction point between said constant-current supply means and said voltage-controlled type current supply means and further coupled to said deflecting coil of said horizontal deflection means, said switching means being arranged so as to control a current flowing through said deflecting coil in accordance with a difference current between said constant-current supply means and said voltage-controlled type current supply means to adjust a position of a raster on said screen of said cathode ray tube.

4. A raster position adjusting circuit as claimed in claim 3, wherein, when the current supply ability of said constant-current supply means is taken to be I (ampere), the maximum current drawing ability of said voltage-controlled type current supply means is arranged to be 2 · I (ampere).

## Patentansprüche

1. Rasterpositions-Einstellschaltung mit einer ersten (Vcc1) und einer zweiten (Vcc2) Spannungsquelle, einer Stromquelle (15), einer Konstantspannungsquelle (3), einer spannungsgesteuerten Stromquelle (16), einem Digital/Analog-Wandler (17), einem Zeilenendtrafo (8), einer Horizontal-Ausgabeschaltung (11), einer Horizontal-Ablenkspule (9), einem Gleichstrom sperrenden Kondensator (10) und einer Drosselspule (12), wobei eine Spannungs-Versorgungsseite der ersten Spannungsquelle mit einem Anschluß der Stromquelle und mit einem Anschluß der Konstantspannungsquelle verbunden ist, der andere Anschluß der Stromquelle mit einem Anschluß der spannungsgesteuerten Stromquelle und der andere Anschluß der spannungsgesteuerten Stromquelle mit einer geerdeten Seite der ersten Spannungsquelle verbunden ist, der Digital/Analog-Wandler mit der spannungsgesteuerten Stromquelle derart verbunden ist, daß eine Ausgangsspannung des Digital/Analog-Wandlers daran angelegt wird, ein Verbindungspunkt zwischen der Stromquelle und der spannungsgesteuerten Stromquelle mit einem Anschluß eines ersten Widerstands (14) und Basisanschlüssen eines ersten (4) und eines zweiten (5) Transistors verbunden ist, der andere Anschluß des ersten Widerstands und Emitteranschlüsse des ersten und des zweiten Transistors miteinander derart an einem Punkt verbunden sind, daß der Verbindungspunkt mit einem Ausgangsanschluß der Konstantspannungsquelle verbunden ist, ein Kollektoranschluß des ersten Transistors mit einer Spannungsversorgungsseite der zweiten Spannungsquelle und ein Kollektoranschluß des zweiten Transistors mit einer geerdeten Seite der zweiten Spannungsquelle verbunden ist, ein Anschluß eines zweiten Widerstands (6) mit einem Verbindungspunkt zwischen dem Kollektoranschluß des ersten Transistors und der zweiten Spannungsquelle verbunden ist, und ein Anschluß eines dritten Widerstands (7) mit einem Verbindungspunkt zwischen dem Kollektoranschluß des zweiten Transistors und der zweiten Spannungsquelle verbunden ist, der andere Anschluß des zweiten Widerstands und der andere Anschluß des dritten Widerstands miteinander verbunden sind, ein Anschluß einer Primärseite des Zeilenendtrafos mit dem Verbindungspunkt zwischen den Emitteranschlüssen der ersten und zweiten Transistoren verbunden ist, der Ausgangsanschluß der Konstantspannungsquelle und der andere Anschluß dessen Primärseite mit der Horizontal-Ausgabeschaltung verbunden ist, ein Anschluß der Horizontal-Ablenkspule mit einem Verbindungspunkt zwischen dem anderen Anschluß der Primärseite des Zeilenendtrafos und der Horizontal-Ausgabeschaltung verbunden ist, der andere Anschluß der Horizontal-Ablenkspule mit einem Anschluß des Gleichstrom sperrenden Kondensators verbunden ist, der andere Anschluß des Gleichstrom sperrenden Kondensators mit der geerdeten Seite der ersten Spannungsquelle verbunden ist, ein Anschluß der Drosselspule mit einem Verbindungspunkt zwischen den zweiten und dritten Widerständen verbunden ist und der andere Anschluß der Drosselspule mit einem Verbindungspunkt zwischen der Horizontal-Ablenkspule und dem Gleichstrom sperrenden Kondensator verbunden ist.

2. Rasterpositions-Einstellschaltung nach Anspruch 1, wobei, wenn die Stromzufuhrfähigkeit der Stromquelle mit I (Ampere) angenommen wird, die maximale Stromaufnahmefähigkeit der spannungsgesteuerten Stromquelle 2 ∗ I (Ampere) beträgt.

3. Rasterpositions-Einstellschaltung zum Einsatz bei einer Kathodenstrahlröhre mit
Horizontal-Ablenkeinrichtungen mit einer Ablenkspule (9) zur Ablenkung eines auf einen Bildschirm der Kathodenstrahlröhre gerichteten Elektronenstrahls,
einer Konstantstromzufuhreinrichtung (15) zur Zufuhr eines konstanten Stroms,
einer spannungsgesteuerten Stromzufuhreinrichtung (16), die mit der Konstantstromzufuhreinrichtung verbunden ist und deren Aufnahmestrom entsprechend einem externen Spannungssignal steuerbar ist, und
Schalteinrichtungen (4, 5), die mit einem Verbindungspunkt zwischen der Konstantstromzufuhreinrichtung und der spannungsgesteuerten Stromzufuhreinrichtung sowie außerdem mit der Ablenkspule der Horizontal-Ablenkeinrichtungen verbunden sind, wobei die Schalteinrichtungen einen durch die Ablenkspule fließenden Strom entsprechend einem Differenzstrom zwischen der Konstantstromzufuhreinrichtung und der spannungsgesteuerten Stromzufuhreinrichtung zur Einstellung einer Rasterposition auf dem Bildschirm der Kathodenstrahlröhre steuern.

4. Rasterpositions-Einstellschaltung nach Anspruch 3, wobei, wenn die Stromzufuhrfähigkeit der Konstantstromzufuhreinrichtung mit I (Ampère) angenommen wird, die maximale Stromaufnahmefähigkeit der spannungsgesteuerten Stromzufuhreinrichtung 2 ∗ I (Ampere) beträgt.

## Revendications

1. Circuit de réglage de position de trame comprenant: des première (Vcc1) et deuxième (Vcc2) sources de tension; une source (15) d'alimentation en courant; une source (3) de tension constante; une source d'alimentation en courant (16) du type commandée en tension; un convertisseur numérique-analogique (17); un transformateur (8) de retour de balayage: un circuit (11) de sortie lignes; une bobine (9) de déviation horizontale; un condensateur (10) de blocage de courant continu; et une bobine d'arrêt (12); le côté alimentation en tension de ladite première source de tension étant couplé à une des bornes de ladite source d'alimentation en courant et couplé, en outre, à une des bornes de ladite source de tension constante, l'autre borne de ladite source d'alimentation en courant étant couplée à une des bornes de ladite source d'alimentation en courant du type commandée en tension et l'autre borne de ladite source d'alimentation en courant, du type commandée en tension, étant couplée au côté mis à la masse de ladite première source de tension, ledit convertisseur numérique-analogique étant couplé à ladite source d'alimentation en courant, du type commandé en tension, de sorte que la tension de sortie dudit convertisseur numérique-analogique lui est appliquée, le point de jonction entre ladite source d'alimentation en courant et ladite source d'alimentation en courant, du type commandée en tension, étant connecté à une des bornes d'une première résistance (14) et aux bases de premier (4) et deuxième (5) transistors, l'autre borne de ladite première résistance et les émetteurs desdits premier et deuxième transistors étant couplés mutuellement en un point de telle manière que le point d'accouplement est couplé à la borne de sortie de ladite source de tension constante, le collecteur dudit premier transistor étant couplé au côté alimentation en tension de ladite deuxième source de tension et le collecteur dudit deuxième transistor étant couplé au côté mis à la masse de ladite deuxième source de tension, une des bornes d'une deuxième résistance (6) étant couplée à un point de jonction entre ledit collecteur dudit premier transistor et ladite deuxième source de tension, et une des bornes d'une troisième résistance (7) étant couplée à un point de jonction entre ledit collecteur dudit deuxième transistor et ladite deuxième source de tension, l'autre borne de ladite deuxième résistance et l'autre borne de ladite troisième résistance étant couplées mutuellement, une des bornes du côté primaire dudit transformateur de retour de balayage étant couplée au point de jonction entre lesdits émetteurs desdits premier et deuxième transistors et ladite borne de sortie de ladite source de tension constante, et l'autre borne dudit côté primaire du transformateur étant couplée audit circuit de sortie lignes, une des bornes de ladite bobine de déviation horizontale étant couplée à un point de jonction entre l'autre borne dudit côté primaire dudit transformateur de retour de balayage et ledit circuit de sortie lignes ainsi que l'autre borne de ladite bobine de déviation horizontale étant couplées à une des bornes dudit condensateur de blocage de courant continu, l'autre borne dudit condensateur de blocage de courant continu étant couplée au côté mis à la masse de ladite première source de tension, une des bornes de ladite bobine d'arrêt étant couplée au point de jonction entre lesdites deuxième et troisième résistance, et l'autre borne de ladite bobine d'arrêt étant couplée à un point de jonction entre ladite bobine de déviation horizontale et ledit condensateur de blocage de courant continu.

2. Circuit de réglage de position de trame selon la revendication 1, dans lequel, si l'on suppose que la capacité d'alimentation en courant de ladite source d'alimentation en courant est I (ampère), on fait en sorte que la capacité maximale de prélèvement de courant de ladite source d'alimentation en courant, du type commandé en tension, est calculée soit de 2 · I (ampère).

3. Circuit de réglage de position de trame destiné à être utilisé dans une tube à rayons cathodiques:
un moyen de déviation horizontale comprenant une bobine de déviation (9) pour dévier un faisceau d'électrons dirigé sur l'écran dudit tube à rayons cathodiques;
un moyen (15) d'alimentation en courant constant pour fournir un courant constant;
un moyen (16) d'alimentation en courant, du type commandé en tension, couplé audit moyen d'alimentation en courant constant et conçu de manière que son courant de prélèvement puisse être commandé en fonction d'un signal de tension extérieur; et
un moyen de commutation (4, 5) couplé au point de jonction entre ledit moyen d'alimentation en courant constant et ledit moyen d'alimentation en courant, du type commandé en tension, et couplé en outre à ladite bobine de déviation dudit moyen de déviation horizontale, ledit moyen de commutation étant conçu de manière à commander le courant circulant à travers ladite bobine de déviation en fonction du courant de différence entre ledit moyen d'alimentation en courant constant et ledit moyen d'alimentation en courant, du type commandé en tension, pour régler la position d'une trame sur ledit écran dudit tube à rayons cathodiques.

4. Circuit de réglage de position de trame selon la revendication 3, dans lequel, si l'on suppose que la capacité d'alimentation en courant dudit moyen d'alimentation en courant constant est I (ampère), on fait en sorte que la capacité maximale de prélèvement de courant dudit moyen d'alimentation en courant, du type commandé en tension, soit de 2 · I (ampère).
